# EUROPEAN PATENT APPLICATION

(11) **EP 4 273 466 A1**
(43) Date of publication of application: **08.11.2023**
(21) Application number: 22171452.0
(22) Date of filing: 03.05.2022
(51) Int. Cl.: F24S 10/20, F24S 10/30, F24S 10/70, F24S 60/10, F24S 80/50, F24S 80/60

(54) **INTEGRATION OF PARTICULATED ENCAPSULATED PHASE CHANGE MATERIALS IN A CONVENTIONAL FLAT-PLATE SOLAR COLLECTOR FOR THE PRODUCTION OF DOMESTIC HOT WATER**

(71) Applicant: National and Kapodistrian University of Athens, 10561 Athens (GR)
(72) Inventor: VRACHOPOULOS, MICHAIL, 34400 Psachna Evia (GR); STATHOPOULOS, VASSILIS, 34400 Psachna Evia (GR); KOUKOU, Maria, 34400 Psachna Evia (GR)
(74) Representative: Kouzelis, Dimitrios

(57) **Abstract**

The present invention refers to the use of an encapsulated phase change material (31) in particulated form in a thermal energy storage tank of a solar heating unit (1) for heating water.

Specifically, the solar heating unit can be used for heating domestic water.

## Description

The present invention refers to the integration of encapsulated phase change materials in a solar heating unit. In particular, the present invention refers to the use of an encapsulated phase change material in particulated form in a thermal energy storage tank of a solar heating unit for heating a fluid. Further, the invention refers to a solar heating unit for heating a fluid, in particular water. Specifically, the solar heating unit can be used for heating domestic water.

The prior art knows several types of solar heaters for heating a fluid and in particular for producing domestic hot water.

It is an object underlying the present invention to provide a solar heating unit for heating a fluid, in particular water, with very good thermal transfer properties, maintainability, and thermal energy storage capacity.

This object is achieved by the use/integration of an encapsulated phase change material in particulated form in a thermal energy storage tank of a solar heating unit for heating a fluid.

Within the context of the present invention, the expressions "encapsulated phase change material in particulated form" and "particulated encapsulated phase change material" can be used interchangeably. Further, the term "encapsulated phase change material" refers to the "particulated encapsulated phase change material".

The fluid to be heated is preferably water.

In particular, the solar heating unit for heating a fluid comprises a solar collector and a thermal energy storage tank with a heat exchanger comprising a first heat exchanger circuit and a second heat exchanger circuit. The thermal energy storage tank comprises an encapsulated phase change material in particulated form.

The term "in participated form" means that the phase change material is in form of particles, and thus not in bulk form. The feature that the thermal energy storage tank comprises an encapsulated phase change material in particulated form particularly means that the thermal energy storage tank comprises particles of an encapsulated phase change material.

Due to the use of the particulated encapsulated phase change material, a large heat transfer area is achieved due to the large contact area of the particulated encapsulated phase change material, i.e. of the particles of the encapsulated phase change material. Thus, good thermal transfer properties can be reached for the solar heating unit. Further, due to the use of the particulated encapsulated phase change material, a reactivity of the phase change material and a corrosion effect with structural materials of the thermal energy storage tank can be reduced. A further advantage of the present invention is a lower risk of leakage or spillage in case of maintenance, system failure, structural failure or damage, e.g. puncture by natural causes, regardless of the temperature of the phase change material, as the phase change material will be in solid form due to encapsulation. In addition, the encapsulated nature of the phase change material enables a control of the volume change it experiences during the phase transition and prevents a phase segregation. Moreover, as the phase change material is in particulated form, an easy and uniform placement and distribution inside the thermal energy storage tank is possible. The solar heating unit can be further easily maintained regardless of the state of the phase change material, as due to encapsulation the encapsulated phase change material maintains a solid and flowable form. Furthermore, the solar heating unit of the present invention provides for an easy on-site maintenance of the thermal energy storage tank, as it is an integral component of the solar heating unit. Additionally, replacement of the phase change material in the thermal storage tank can be easily performed.

A phase change material is a material that utilizes latent thermal (heat) storage. Latent thermal (heat) storage involves heat transfer due to a phase transformation taking place in the material in a specific temperature range. Thus, phase change materials are a group of materials that exchange amount of thermal energy as latent heat within a specific temperature range involving a phase transformation.

It is noted that the term "solar heating unit" in particular means that said device is built as a unit. In other words, this means that the solar collector and the thermal energy storage tank form together a unit. In this configuration, the thermal energy storage tank is advantageously integrated in the solar heating unit. The solar heating unit is advantageously configured to be mounted to a base, in particular a metal base.

Advantageously, the encapsulated phase change material is in thermal contact with both heat exchanger circuits, i.e. the first heat exchanger circuit and the second heat exchanger circuit.

Preferably, the solar collector comprises a solar collector circuit and a solar-energy absorbing element for absorbing solar energy and converting it to heat.

Preferably, the first heat exchanger circuit communicates with the solar collector circuit of the solar collector such that they form a closed circuit for circulating a heat transfer fluid.

The expression that the encapsulated phase change material is in thermal contact with the second heat exchanger circuit advantageously means that heat transfer can occur between the fluid to be heated (in particular, from water supply network) and the encapsulated phase change material, in particular from the encapsulated phase change material to the fluid to be heated. Advantageously, the encapsulated phase change material is in direct (physical) contact with the second heat exchanger circuit. This means that, advantageously, particles of the encapsulated phase change material directly contact the second heat exchanger circuit.

The expression that the encapsulated phase change material is in thermal contact with the first heat exchanger circuit advantageously means that heat transfer can occur between the heat transfer fluid and the encapsulated phase change material, in particular from the heat transfer fluid to the encapsulated phase change material. Advantageously, the encapsulated phase change material is in direct (physical) contact with the first heat exchanger circuit. This means that, advantageously, particles of the encapsulated phase change material directly contact the first heat exchanger circuit.

Preferably, the encapsulated phase change material envelops/surrounds both circuits of the heat exchanger, i.e. the first heat exchanger circuit and the second heat exchanger circuit.

Within the context of the present invention, both a closed circuit and an open circuit can be understood as "circuit". The solar collector circuit, the first heat exchanger circuit and the second heat exchanger circuit are fluid circuits. The term "fluid circuit" means within the context of the present invention that the circuit is configured for receiving a fluid that flows through the fluid circuit. Further, the term "circuit" can in particular be understood as a piping in the framework of the present invention.

The solar collector is in particular a flat plate solar collector.

Preferably, the encapsulated phase change material comprises a core-shell phase change material (core-shell material; CS-PCM) and/or a shape-stabilized phase change material (SS-PCM). This means in particular that the encapsulated phase change material may comprise particles of a core-shell phase change material (core-shell material; CS-PCM) and/or a shape-stabilized phase change material. Core-shell phase change materials are made of particles of phase change materials (core) covered by another material (shell). In another formulation, a core-shell phase change material comprises a core of a phase change material and a shell that covers the core and is made of another material than a phase change material. A shape-stabilized material is a composite of a phase change material with another material (not a phase change material) that retains molten phase change material by capillarity.

Preferably, the encapsulated phase change material comprises an organic phase change material and/or an inorganic phase change material and/or a eutectic phase change material. This means in particular that the encapsulated phase change material may comprise particles of an organic phase change material and/or an inorganic phase change material and/or a eutectic phase change material. The organic phase change material may particularly comprise a paraffin and/or a non-paraffin such as esters, fatty acids, alcohols and glycols or polymers. The inorganic phase change material may particularly comprise a salt hydrate and/or an alloy and/or a metal. A eutectic phase change material may comprise a mixed phase change material as organic-organic, inorganic-inorganic or inorganic-organic.

Preferably, a particle size of the encapsulated phase change material is smaller than or equal to 5 mm, more preferably smaller than or equal to 3 mm. The term "particle size" means the size of the particles of the encapsulated phase change material. The size of a particle is in particular understood as the maximum dimension of the particle. For example, if the particle is spherically formed, its size corresponds to the diameter of the particle.

The particles of the encapsulated phase change material may have the same size or different sizes from each other.

The encapsulated phase change material advantageously acts as a thermal energy storage medium.

The encapsulated phase change material preferably has a working temperature of phase transition that lies in a range between 25 degrees Celsius and 90 degrees Celsius. This means that the encapsulated phase change material is configured to exchange thermal energy as latent heat involving a phase transformation within the temperature range of 25 degrees Celsius to 90 degrees Celsius.

The heat transfer fluid is advantageously a liquid. Preferably, the heat transfer fluid is water or a mixture of water and glycol. Other fluids can, however, also be used as the heat transfer fluid.

The solar collector advantageously comprises a housing. Preferably, the solar-energy absorbing element and the solar collector circuit are arranged in the housing. The housing advantageously defines a space of the solar collector.

Advantageously, the thermal energy storage tank comprises/defines a space. Preferably, the heat exchanger and the encapsulated phase change material are located in the space of the thermal energy storage tank. The space can advantageously be defined by a housing of the thermal energy storage tank.

It is noted that the housing of the solar collector and the housing of the thermal energy storage tank can be separate housings or a single housing. In both configurations, the space of the solar collector is advantageously separated from the space of the thermal energy storage tank.

Preferably, the second heat exchanger circuit is an open circuit. The open circuit advantageously has an inlet and an outlet. The inlet is configured to be connected with a fluid supply of the fluid to be heated. In particular, the fluid supply can be a water supply, in particular a water supply network. The outlet is advantageously configured to be connected to a system to be provided with the heated fluid, in particular to such a system in a house.

Advantageously, the solar collector and the thermal energy storage tank are connected/attached to each other. Preferably, the solar collector is arranged on the thermal energy storage tank, in particular in a thickness direction. Thus, a compact solar heating unit can be achieved.

Preferably, the solar collector comprises a thermal insulation so that thermal losses from the solar collector circuit can be minimized or eliminated. Thereby, solar energy absorbed and converted to heat by the solar-energy absorbing element can efficiently be transferred to the heat transfer fluid.

Preferably, the thermal energy storage tank comprises a thermal insulation that surrounds the housing of the thermal energy storage tank. Thereby, heat transferred to the heat transfer fluid can efficiently be transferred to the fluid to be heated.

The solar-energy absorbing element and the solar collector circuit are configured such that heat generated by the solar-energy absorbing element by converting solar energy is transferable to the solar collector circuit.

Advantageously, the encapsulated phase change material and the first heat exchanger circuit, in particular the closed circuit formed by the solar collector circuit and the first heat exchanger circuit, are configured such that heat from the heat transfer fluid is storable as latent heat in the encapsulated phase change material.

Advantageously, the closed circuit is filled with a heat transfer fluid. Preferably, the heat transfer fluid is water.

During operation of the solar heating unit for heating the fluid, in particular for heating water, solar energy is captured by the solar collector. More particularly, solar energy is absorbed by the solar-energy absorbing element and converted to heat, which is transferred to the heat transfer fluid through the solar collector circuit. The heat transfer fluid is thus heated, wherein heat from the heat transfer fluid is transferred through the second heat exchanger circuit to the phase change material and stored as latent heat in the phase change material. The stored thermal energy in the phase change material can then be transferred to the fluid flowing in the open circuit, e.g. at a later point. Thereby, the fluid flowing in the open circuit can be heated.

It is noted that the closed circuit formed by the solar collector circuit and the first heat exchanger circuit can also be characterized within the context of the present invention as a charging circuit, as it is configured to store thermal energy. The second heat exchanger circuit can also be characterized within the context of the present invention as a discharging circuit, as it is configured to receive thermal energy.

Further, the present invention refers to an arrangement comprising a solar heating unit as described above and a base, in particular a metal base, to which the solar heating unit is mounted.

A further aspect of the present invention refers to a method of producing a solar heating unit for heating a fluid, in particular of a previously described solar heating unit. The method includes the steps of providing a solar collector, providing a thermal energy storage tank comprising a heat exchanger with a first heat exchanger circuit and a second heat exchanger circuit, and placing an encapsulated phase change material in particulated form in the thermal energy storage tank. In particular, the encapsulated phase change material in particulated form is placed in a space of the thermal energy storage tank. In other words, particles of the encapsulated phase change material are put into the space of the thermal energy storage tank.

Advantageously, the method further comprises the step of attaching the solar collector and the thermal energy storage tank to each other such that the solar heating unit is achieved.

The method has in particular the advantage that existing solar heating units with a solar collector and a thermal energy storage tank comprising a heat exchanger with a first heat exchanger circuit and a second heat exchanger circuit can be retroffited with an encapsulated phase change material in particulated form.

Disclosed is further the use of an encapsulated phase change material in particulated form in a thermal energy storage tank of a solar heating unit for heating a fluid, the solar heating unit further comprising a solar collector, wherein the thermal energy storage tank further comprises a heat exchanger with a first heat exchanger circuit and a second heat exchanger circuit for receiving a fluid to be heated. This preferably means a method for heating a fluid by using a solar heating unit comprising a solar collector and a thermal energy storage tank, wherein the thermal energy storage tank comprising a heat exchanger with a first heat exchanger circuit and a second heat exchanger circuit for receiving a fluid to be heated, and an encapsulated phase change material in particulated form.

These and further details, advantages and features of the present invention will be described based on embodiments of the invention and by taking reference to the accompanying figures.
- Figure 1: shows a schematic cross-sectional view of a solar heating unit according to a preferred embodiment of the present invention.
- Figure 2: shows a further schematic cross-sectional view of the solar heating unit according to the preferred embodiment of the present invention that shows the design of the solar heating unit in more details.
- Figure 3: shows a schematic top view of a part of the solar heating unit according to the preferred embodiment of the present invention.

In the following, a preferred embodiment and the technical background of the present invention are presented in detail by taking reference to the accompanying figures.

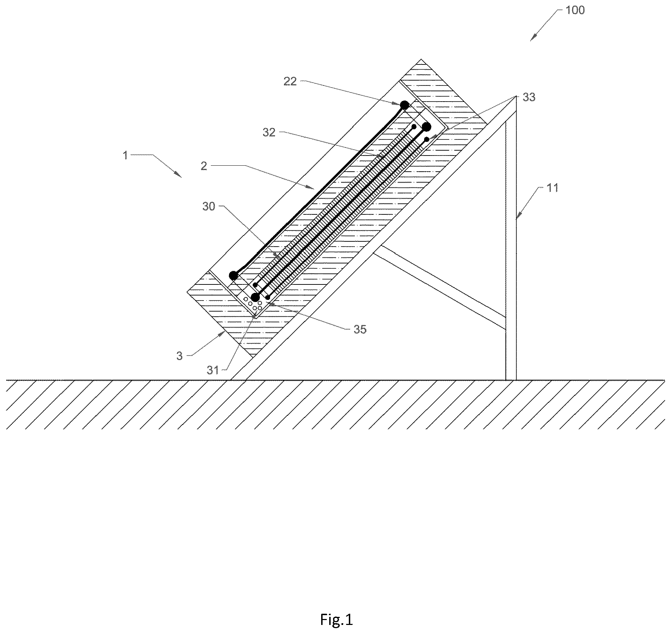

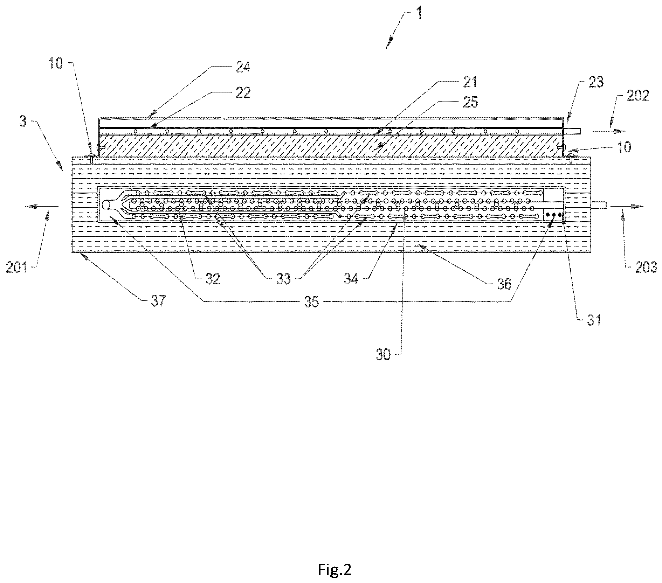

As can be seen from figures 1 and 2, a solar heating unit 1 for heating a fluid comprises a solar collector 2 and a thermal energy storage tank 3. In the present embodiment, the solar heating unit 1 is used for heating water for domestic purposes. However, it is also possible to use the solar heating unit 1 for other applications that require hot water at such temperatures.

The solar collector 2, which in the present embodiment is a flat plate solar collector, comprises a solar-energy absorbing element 21 for absorbing solar energy and converting it to heat, and a solar collector circuit 22.

As shown in figure 2, the solar-energy absorbing element 21 and the solar collector circuit 22 are arranged inside a housing 23 of the solar collector 2. The solar collector 2 further comprises a transparent panel 24 that is particularly made of glass, through which sun light can reach the solar-energy absorbing element 21. The solar-energy absorbing element 21 and the solar collector circuit 22 are advantageously in thermal contact with each other so that heat generated by the solar-energy absorbing element 21 by converting solar energy can be transferred to the solar collector circuit 22.

In order to minimize or eliminate heat losses, a thermal insulation 25 is provided in the housing 23 of the solar collector 2. In particular, in the present embodiment, the components of the collector 2 are arranged in the following order in the direction of the thickness of the collector 2: transparent panel 24 - solar collector circuit 22 - solar-energy absorbing element 21 - thermal insulation 25.

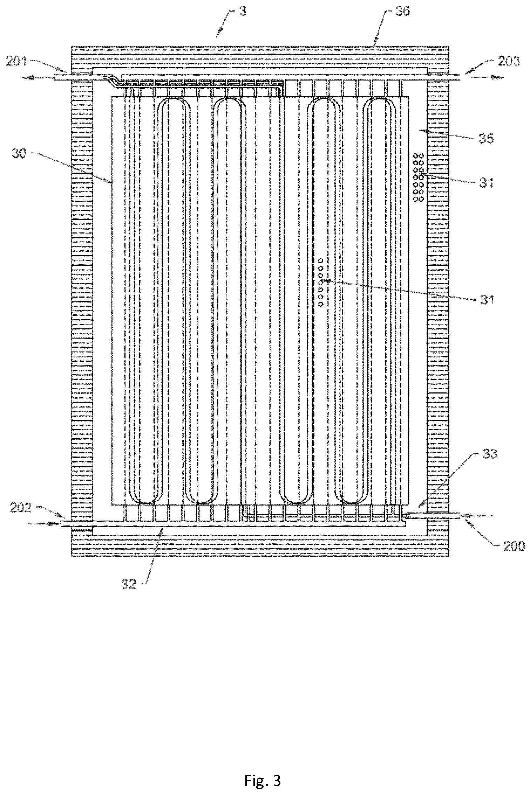

The thermal energy storage tank 3 comprises an encapsulated phase change material 31 in particulated form and a heat exchanger 30. The heat exchanger 30 comprises a first heat exchanger circuit 32, which communicates with the solar collector circuit 22 such that they form a closed circuit for receiving a heat transfer fluid. The heat transfer fluid is water in the present embodiment. The thermal energy storage tank 3 further comprises a target fluid circuit 33 for receiving a fluid to be heated, in this case water. The target fluid circuit 33 is an open circuit and configured to be connected to the tap water supply. This is depicted in figure 3, in which arrow 200 shows the flow of water to be heated coming from the tap water supply into an inlet of the target fluid circuit 33. The arrow 201 shows the flow of the heated water out of an outlet of the target fluid circuit 33 to a system that uses the heated water. Arrow 202 represents the flow of the heat transfer fluid from the solar collector circuit 22 to the first heat exchanger circuit 32, while arrow 203 represents the flow of the heat transfer fluid from the first heat exchanger circuit 32 to the solar collector circuit 22.

The first heat exchanger circuit 32 and the second heat exchanger circuit 33 are arranged in a housing 34 of the thermal energy storage tank 3, in particular in a space 35 defined by the housing 34. The housing 34 is in particular a sheet metal welded housing. The encapsulated phase change material 31 is placed in the space 35 and is in thermal contact with the second heat exchanger circuit 33. In the figures, only some particles of the particulated encapsulated phase change material 31 are shown for the sake of a clearer view of the solar heating unit 1. However, the space 35 is filled with the encapsulated phase change material 31.

Additionally, the encapsulated phase change material 31 is arranged in the space 35 such that it is also in thermal contact with the first heat exchanger circuit 32. In particular, the encapsulated phase change material 31 is in direct (physical) contact with the first heat exchanger circuit 32 and the second heat exchanger circuit 33. Thus, heat transfer can take place between the encapsulated phase change material 31 and the first heat exchanger circuit 32, and between the encapsulated phase change material 31 and the second heat exchanger circuit 33. In particular, the encapsulated phase change material 31 and the first heat exchanger circuit 32 are configured such that heat from the heat transfer fluid is storable as latent heat in the encapsulated phase change material 31. For minimizing or eliminating heat losses from the first heat exchanger circuit 32, the second heat exchanger circuit 33 and the encapsulated phase change material 31, the housing 34 is surrounded by a thermal insulation 36. Further provided is an outer cover 37, in particular made of metal, attached to the thermal insulation 36.

The encapsulated phase change material 31 may comprise a core-shell phase change material and/or a shape-stabilized phase change material. In view of its chemical nature, the encapsulated phase change material 31 may comprise an organic phase change material and/or an inorganic phase change material and/or a eutectic phase change material.

In order to achieve a high heat transfer area between the encapsulated phase change material 31 and the second heat exchanger circuit 33 as well as the first heat exchanger circuit 32, a particle size of the encapsulated phase change material is chosen to be smaller than or equal to 5 mm, more preferably smaller than or equal to 3 mm. Thereby, the overall area/surface of the encapsulated phase change material 31 is increased, what in turn results in an increased heat transfer area and thus also heat transfer between the aforementioned components.

Further, the encapsulated phase change material 31 is chosen to have a working temperature of phase transition that lies in a range between 25 degrees Celsius and 90 degrees Celsius.

As can be derived from figure 2, the components of the thermal energy storage tank 3 are advantageously arranged in the following order in a direction of the thickness of the thermal energy storage tank 3: thermal insulation 36 - housing 34 with space 35 and the aforementioned components arranged therein -thermal insulation 36 - outer cover 37.

It can further be derived from figure 2 that the solar collector 2 and the thermal energy storage tank 3 are mechanically connected to each other by mechanical connecting means 10. Specifically, the solar collector 2 is placed on the thermal energy storage tank 3 in a thickness direction of the solar heating unit 1. The thickness direction of the solar heating unit 1 particularly corresponds to the thickness direction of the solar collector 2 and the thickness direction of the thermal energy storage tank 3.

Referring back to figure 1, it can be seen that the solar heating unit 1 is attached to a base 11, in particular a metal base. The solar heating unit 1 together with the base 11 form an arrangement 100.

During operation of the solar heating unit 1 for heating the water, solar energy is captured by the solar collector 2. More particularly, sun light passes through the transparent panel 24 and solar energy is absorbed by the solar-energy absorbing element 21 of the solar collector 2 and converted to heat. The heat generated by the solar-energy absorbing element 21 is transferred to the heat transfer fluid through the solar collector circuit 22. The heat transfer fluid is thus heated. Heat from the heat transfer fluid is transferred through the first heat exchanger circuit 32 to the encapsulated phase change material 31 and stored as latent heat in the encapsulated phase change material 31. The latent heat, i.e. the stored thermal energy in the phase change material 31, can then be transferred to the water flowing in the second heat exchanger circuit 33, e.g. at a later point when there is no or little sun light. Thereby, the water flowing in the second heat exchanger circuit 33 can be heated.

The described solar heating unit 1 for producing hot water has the advantages of good thermal properties and maintainability.

In addition to the foregoing description of the present invention, for an additional disclosure explicit reference is taken to graphic representation of figures 1 to 3.

### List of reference signs

- 1: solar heating unit
- 2: solar collector
- 3: thermal energy storage tank

- 10: mechanical connecting means
- 11: base

- 21: solar-energy absorbing element
- 22: solar collector circuit
- 23: housing
- 24: transparent panel
- 25: thermal insulation

- 30: heat exchanger
- 31: encapsulated phase change material
- 32: first heat exchanger circuit
- 33: second heat exchanger circuit
- 34: housing
- 35: space
- 36: thermal insulation
- 37: outer cover

- 100: arrangement
- 200: arrow
- 201: arrow
- 202: arrow
- 203: arrow

## Claims

1. A solar heating unit (1) for heating a fluid comprising
a solar collector (2) and a thermal energy storage tank (3) comprising a heat exchanger (30) with a first heat exchanger circuit (32) and a second heat exchanger circuit (33),
**characterised in that** the thermal energy storage tank (3) comprises an encapsulated phase change material (31) in particulated form.

2. The solar heating unit (1) according to claim 1, wherein the encapsulated phase change material (31) comprises a core-shell phase change material and/or a shape-stabilized phase change material.

3. The solar heating unit (1) according to any of the preceding claims, wherein the encapsulated phase change material (31) comprises an organic phase change material and/or an inorganic phase change material and/or a eutectic phase change material.

4. The solar heating unit (1) according to any of the preceding claims, wherein a particle size of the encapsulated phase change material (31) is smaller than or equal to 5 mm, more preferably smaller than or equal to 3 mm,
and/or
wherein the encapsulated phase change material (31) has a working temperature of phase transition that lies in a range between 25 degrees Celsius and 90 degrees Celsius.

5. The solar heating unit (1) according to any of the preceding claims, wherein the encapsulated phase change material (31) is in thermal contact with the first heat exchanger circuit (32) and the second heat exchanger circuit (33).

6. The solar heating unit (1) according to any of the preceding claims, wherein the solar collector comprises a solar collector circuit (22) and a solar-energy absorbing element (21) for absorbing solar energy and converting it to heat, wherein the solar collector circuit (22) and the first heat exchanger circuit (32) communicate with each other such that a close circuit is formed for circulating a heat transfer fluid.

7. The solar heating unit (1) according to claim 7, wherein the solar collector (2) comprises a housing (23), in which the solar-energy absorbing element (21) and the solar collector circuit (22) are arranged,
and/or
wherein the thermal energy storage tank (3) comprises a space (35), in which the first heat exchanger circuit (32), the second heat exchanger circuit (33) and the encapsulated phase change material (31) are located.

8. The solar heating unit (1) according to any of the preceding claims, wherein the second heat exchanger circuit (33) is an open circuit for receiving a fluid to be heated.

9. The solar heating unit (1) according to any of the preceding claims, wherein the solar collector (2) and the thermal energy storage tank (3) are attached to each other.

10. The solar heating unit (1) according to any of claims 6 to 9, wherein the solar collector (2) comprises a thermal insulation (25) for thermally insulating the solar collector circuit (22),
and/or
wherein the thermal energy storage tank (3) comprises a thermal insulation (36) that surrounds the space (35) of the thermal energy storage tank (3).

11. The solar heating unit (1) according to any of claims 6 to 10, wherein the solar-energy absorbing element (21) and the solar collector circuit (22) are configured such that heat generated by the solar-energy absorbing element (21) by converting solar energy is transferable to the solar collector circuit (22),
and/or
wherein the encapsulated phase change material (31) and the first heat exchanger circuit (32) are configured such that heat from the heat transfer fluid is storable as latent heat in the encapsulated phase change material (31).

12. The solar heating unit (1) according to any of claims 6 to 11, wherein the closed circuit is filled with the heat transfer fluid.

13. A method of producing a solar heating unit (1) for heating a fluid, in particular a solar heating unit (1) according to any of the preceding claims, wherein the method includes the steps:
providing a solar collector (2),
providing a thermal energy storage tank (3) comprising a heat exchanger (30) with a first heat exchanger circuit (32) and a second heat exchanger circuit (33), **characterised by** the step of placing an encapsulated phase change material (31) in particulated form in the thermal energy storage tank (3).

14. Use of an encapsulated phase change material (31) in particulated form in a thermal energy storage tank (3) of a solar heating unit (1) for heating a fluid, the solar heating unit (1) further comprising a solar collector (2), wherein the thermal energy storage tank (3) further comprises a heat exchanger (30) with a first heat exchanger circuit (32) and a second heat exchanger circuit (33) for receiving a fluid to be heated.

15. The use according to claim 14, wherein a particle size of the encapsulated phase change material (31) is smaller than or equal to 5 mm, more preferably smaller than or equal to 3 mm,
and/or
wherein the encapsulated phase change material (31) has a working temperature of phase transition that lies in a range between 25 degrees Celsius and 90 degrees Celsius.
